Europäisches Patentamt

European Patent Office

Office européen des brevets

(11) Publication number: **0 312 390 B1**

# EUROPEAN PATENT SPECIFICATION

(45) Date of publication of patent specification: **15.04.92**  (51) Int. Cl.5: **B66F  17/00**, G01G  19/08

(21) Application number: **88309655.4**

(22) Date of filing: **14.10.88**

Consolidated with 88909348.0/0341276
(European application No./publication No.) by
decision dated 07.08.90.

(54) **Vehicle.**

(30) Priority: **15.10.87 GB 8724206**

(43) Date of publication of application:
**19.04.89 Bulletin  89/16**

(45) Publication of the grant of the patent:
**15.04.92 Bulletin  92/16**

(84) Designated Contracting States:
**AT BE CH DE ES FR GR IT LI LU NL SE**

(56) References cited:
**DE-A- 1 531 166     DE-B- 1 095 488**
**FR-A- 2 287 413     GB-A- 930 904**
**GB-A- 2 178 178     US-A- 1 787 884**
**US-A- 2 774 437**

(73) Proprietor: **J.C. BAMFORD EXCAVATORS
LIMITED
Rocester
Uttoxeter Staffordshire ST14 5JP(GB)**

(72) Inventor: **Knight, David John
Willow Cottage Basford Bridge Lane
Cheddleton Staffordshire ST13 7EP(GB)**

(74) Representative: **Leach, John Nigel
FORRESTER & BOEHMERT Franz-
Joseph-Strasse 38
W-8000 München 40(DE)**

Rank Xerox (UK) Business Services

## Description

This invention relates to a vehicle of the type having ground engaging wheels such as road wheels or wheels for guiding/driving tracks, and means to sense a load such as the weight of the vehicle transmitted from an axle carrying the wheels, to the ground engaging wheels.

In DE-A-1095488 there is disclosed a load sensing arrangement for sensing load transmitted from an axle to a ground wheel. The wheel is carried on the axle and the axle has a mechanical sensing element, and counterbalancing spring means: each contained in chambers in the axle, so that a change in loading will cause movement between the axle and wheel against the force of the spring means, which movement is sensed by the mechanical sensing element.

The arrangement relies on the spring means providing a constant force or else the calibration of the device will be upset.

Also, the arrangement is only able to effect a warning signal when a particular load threshold is exceeded, and is unable to give an actual measure of load.

Furthermore, the load is primarily transmitted directly between wheel and axle so that even a more sophisticated sensing arrangement could not give an accurate indication of the load thus transmitted.

According to one aspect of the invention we provide a vehicle having wheels comprising an axle and a pair of wheels carried on hubs at opposite ends of the axle, means to sense a load transmitted from the axle to at least one of the wheels, characterised in that the load sensing means comprises a load cell which provides a structural connection between the axle and the hub of the respective wheel so that the load is transmitted through the load cell to the hub.

The invention will now be described with the aid of the accompanying drawings in which:

FIGURE 1 is a side illustrative view of a vehicle which may incorporate the invention;

FIGURE 2 is a side view shown partly in section of the steering axle of Figure 1;

FIGURE 3 is a plan view of the axle of Figure 2; and,

FIGURE 4 is an enlarged view of the cross sectioned part of the axle of Figure 2.

Referring to the drawings, a vehicle 10 which may embody the invention comprises a loading vehicle which has a loading arm 11 mounted on a body 12 for movement about an axis 13; by hydraulic actuators 14.

The body has two pairs of ground engaging wheels 15 and 16, the rear pair 16 being movable to steer the vehicle, whilst wheels 15 are fixed.

An operator may drive the vehicle 10 and operate the actuators 14 from a cab 18.

The loading arm 11 in this example is of the telescopic type having a base part 19 which is fixed relative to the pivot 13, and a telescoping part 20 which can be telescoped by hydraulic actuators with the base part 19 (not shown), the telescoping part 20 carrying at its outermost end, loading forks 21. It will be appreciated that any desired implement such as a bucket for example could be provided as an alternative to the loading forks 21.

Such a loading arm 11 is able to lift loads to a considerable height relative to the vehicle body 12 and by extending the telescoping part 20 forwardly, loads can be moved a considerable distance from the vehicle body 12.

The loading forks 21 can be moved relative to the telescoping part 20 about a pivot axis 17 by a further actuator 22, again operated from the operator's cab 18, and/or operated automatically as the boom 11 is lifted and lowered to maintain the forks 21 in a level attitude as shown.

It will be appreciated by those skilled in the art that the vehicle has to be particularly designed to provide maximum stability in a fore and aft direction over the entire working range of the arm 11 for a maximum specified load.

If the operator causes the arm 11 to lift a load which exceeds the maximum safe load, the vehicle 10 may become unstable, at least when the load is moved out beyond a safe limit, as the telescoping part 20 for example is telescoped forwardly.

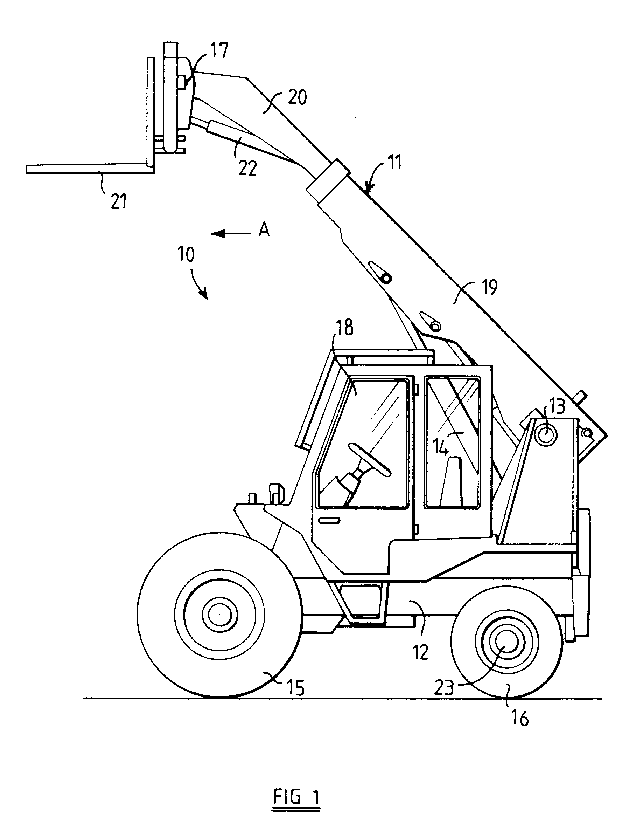

Hence it is conventional practice to provide a safe load indicator to provide a warning to the operator when, for example, a load is moved out in the direction of arrow A in figure 1 of the drawings, relative to the body 12, beyond a safe limit.

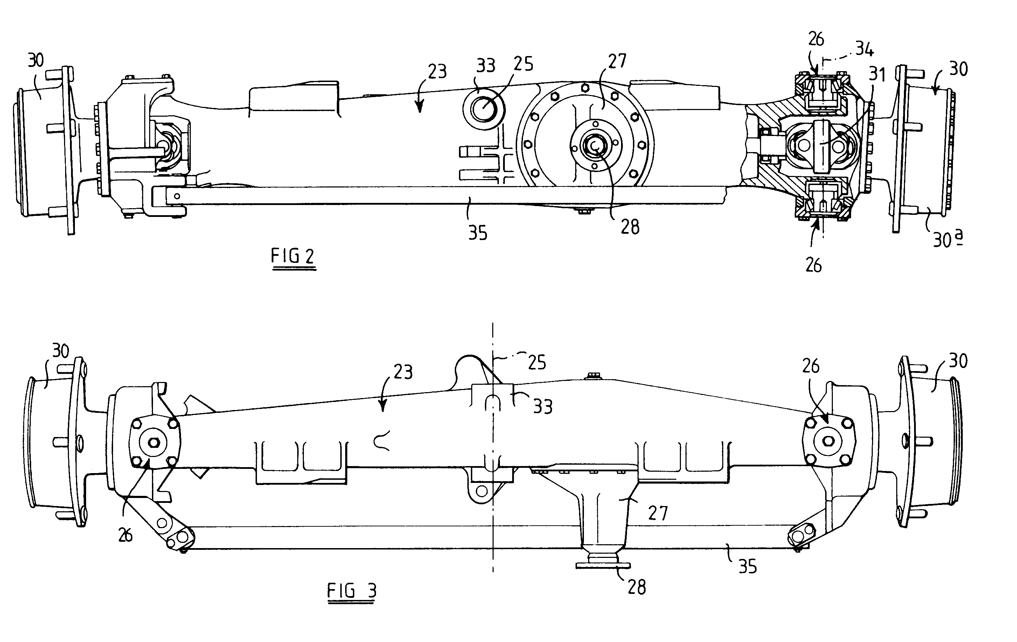

The vehicle 10 has a rigid rear axle 23 (see figures 2 to 4) carrying wheels 16 on hubs 30. The axle 23 is pivoted to the body 12 for pivoting about a single central pivot axis 25 as is conventional. Previously, it has been usual practice for strain gauges to be provided on the pin. Using these strain gauges, the weight of the vehicle on the rear axle 23 transmitted via the pin, can be determined, to give an indication to the operator as to how movement of the load is changing the balance of the vehicle.

Such conventional load sensing arrangements are however restrictive, and can only be used with this type of axle mounting arrangement, and furthermore, such conventional sensing arrangements have not been found to be particularly accurate.

In accordance with the invention, strain gauges are not used on a load pin at the pivot axis 25, but rather, in this example, a pair of load cells 26 are used one at each of the opposite ends of the axle 23, at positions spaced outwardly of the axis 25, adjacent each hub 30 provided for wheels 16.

The construction of each end of the axle 23 is substantially identical, but oppositely handed, and hence only a detailed description of the end of the axle 23 shown in fragmentary cross section in figure 2 will be described in detail.

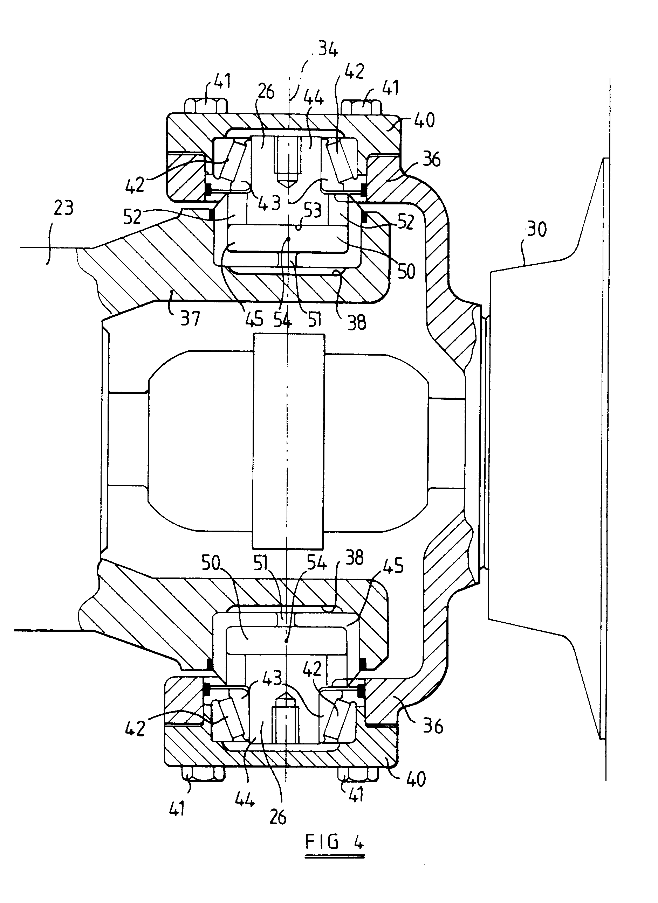

Referring particularly to figures 2 and 3: it can be seen that the axle 23 is a powered axle, having a housing 27 for a crown wheel and gear, which is connected at 28 via a suitable transmission to an engine of the vehicle 10. Within the axle 23, half shafts (not shown) each extend to a hub 30 at each end via a universal joint 31, so that an outer wheel receiving part 30a of the hub 30 may be driven, via a constant velocity joint mounted within the hub 30. The hub 30 also contains brakes as is conventional although alternatively, brakes could be provided to brake the half-shafts, again as is conventional.

In this example, the axle 23 is connected to the vehicle body 12 by a load pin which is received in a pivot boss 33 so that the axle 23 may oscillate about an axis 25 although as will become apparent hereinafter, other types of axle can be used as required.

Each hub 30 may be moved about a generally upright axis 34 for steering, the hubs 30 at each end of the axle 23 being connected to a steering bar 35 which may be moved by a rack and pinion mechanism or by hydraulic actuators as required, under the control of the operator.

Referring now also to figure 4, the hub mounting is shown to an enlarged scale, with various parts removed for clarity.

The hub 30 comprises a pair of spaced bearing mounting parts 36 which receive between them the axle end 37 which is of channel-like configuration, the opening of the channel in use, receiving the universal joint 31 which is not shown.

The limbs of the axle end 37 each present outwardly extending cups 38, and load cells 26 are disposed in the cups 38 between the limbs of the channel axle end 37 and bearing mounting parts 36 of the hub 30.

This is a convenient arrangement because in use, as the hubs 30 are turned, the load cells 26 remain stationary, thereby facilitating making electrical connections to the load cells 26.

However, if required, the ends of the axle 23 may have mutually inwardly facing cups to receive the load cells with the load cells 26 being movable with the hubs 30.

The bearing mounting parts 36 each have a retaining cap 40 which may be clamped down by bolts 41 to clamp bearings 42 in position so that the hub 30 can rotate as a whole about axis 34.

Preferably, the caps 40 are tensioned down by the bolts 41 to pre-load the bearings 42, so that in use, both the upper and lower load cells are always in a compressed state.

It can be seen that the load cells 26 each comprise a bearing part 43 with which the bearings 42 engage, around a smaller diameter part 44 which is received by the bearing mounting parts 36, and a larger diameter part 45 received in the respective cup 38 of the channel end 37. Thus there is a small gap provided between the bearing mounting parts 36 and the channel axle end 37 to provide a free movement of the hub 30 about the axis 34.

The weight of the vehicle 10 on axle 23 is thus transmitted to the ground through the pair of load cells 26.

As the effective weight of the vehicle on the rear axle 23 changes, for example as the forks 21 are loaded or unloaded, the change in compression of the load cells 26 will be indicative of the change in load. As the load transmitted through axle 23 to the ground increases, the compression of the lower load cell 26 will increase, and the compression of the upper load cell 26 will decrease.

Each load cell 26 has an inner chamber 50 and a passage 51 extending from the chamber 50 to permit electrical connections to be made with a capacitive or inductive proximity measuring device 54, mounted in chamber 50. The device 54 is able to measure the distance from device 54 to a chamber wall 53, with great accuracy. As the load cell 26 is subjected to a changes in compression, this distance will change by an amount depending upon the magnitude of the changing effective weight on the axle 23, as the load cell will be distorted by the load. The cell 26 includes a plurality of passages 52 which are arranged generally annularly around the sensor 54, which cause changes in load on the cell 26 to result in greater changes of the distance between sensor 54 and the wall 53 than otherwise would occur.

Each proximity measuring device 54 is connected in a suitable electronic circuit arranged to operate as follows.

When the vehicle 10 is loaded with a load above a safe load, or if the load is moved too far outwardly of the vehicle body 12 so as to cause the vehicle 10 to become potentially unstable, the gap between the device 54 and the chamber wall 53 of the upper load cell 26 will close whilst the gap between the pin 52 and the opposite chamber wall 53 of the lower load cell 26 will open, more than a threshold amount, and the electrical circuit in which the proximity measuring devices 54 are connected may thus give a warning to the operator that the vehicle is becoming unstable or, in addition, the electric circuit may act to prevent the operator continuing the action which is causing instability, for example by preventing further outward telescoping movement of part 20 of the boom 11, when the load is being moved outwardly.

In the example described, each axle 23 may carry four load cells 26, two at each end, and the electrical circuit may be arranged to average the readings from each of the four proximity measuring devices 54 to provide a very accurate continuous indication as to the actual effective weight of the vehicle transmitted through the axle 23 to the ground.

Of course, if desired, where only a less accurate determination is required, only one load cell 26 at each end of axle 23, or even a single load cell at one end only need be provided.

However, by providing one load cell or two load cells at each end, sufficient accuracy may be achieved to not only detect whether the vehicle is becoming unstable, but a measure of the static and/or dynamic weight of the vehicle overall can be achieved so that the actual weight of a load can be determined.

It may be necessary to provide one or more load cells 26 on the axle carrying the front wheels 15, where such a measurement is required, so that the total weight of the vehicle (and load) can be measured on the front and rear axles.

It will be appreciated that the actual type of load cell employed may be selected depending upon the general weight to which the load cell must respond, and the accuracy required. Load cells generally are known, and the detailed construction of the load cell employed does not play any particular part of the invention, provided that the load cell is adapted to be positioned as described between the wheel hub 30 and the axle 23.

By providing a load cell at each end of a rigid non oscillating axle 23 such as the front axle of the vehicle 10 carrying wheels 15, not only can the stability of the machine 10 be determined in a fore and aft direction, but by comparing different readings of the load cells 26 at each end of the axle, the lateral stability of the vehicle can be monitored, which is particularly important in a vehicle in which, for example, a load can be moved laterally of the vehicle as well as fore and aft.

Thus the invention may be employed not only to a loading vehicle such as shown at 10 in figure 1, but to any loading/excavating vehicle, or even to a road vehicle such as a lorry or trailer where the stability of the vehicle during loading for example needs to be monitored and/or where the actual weight of the load on the vehicle, is to be determined.

Although the invention has been described for particular use with an oscillating type of axle construction, the invention may be employed on a suspended axle arrangement provided that the load cell or cells is/are positioned between hubs carrying the ground-engaging wheels, or driven/guide wheels of a tracked vehicle and the respective axle, so that the load cell or cells is/are responsive to the actual weight of the vehicle transmitted to the ground through the ground engaging wheels.

**Claims**

1. A vehicle (10) having wheels comprising an axle (23) and a pair of wheels (15,16) carried on hubs (30) at opposite ends (37) of the axle (23) means (26) to sense a load transmitted from the axle (23), to at least one of the wheels (15,16), characterised in that the load sensing means (26) comprises a load cell which provides a structural connection between the axle (23) and the hub (30) of the respective wheel (15,16) so that the load is transmitted through the load cell (26) to the hub (30).

2. A vehicle (10) according to claim 1 characterised in that there are a pair of load cells (26) each providing a structural connection between one of the axle ends (37) and a respective hub (30).

3. A vehicle according to claim 2 characterised in that a pair of load cells (26) are provided between each of the axle ends (37) and the respective hub (30).

4. A vehicle according to claim 3 characterised in that the hubs (30) carrying the wheels (15,16) are each movable relative to the axle (23) about a respective generally upright axis (34) to effect steering of the vehicle.

5. A vehicle according to claim 4 characterised in that each of the load cells (26) has an axially extending part (43,44) which provides a bearing surface for bearings (42) between the respective load cell (26) and hub (30).

6. A vehicle according to any one of the preceding claims characterised in that the or each load cell comprises a capacitive or inductive proximity measuring device (54) which measures changes in a dimension of the load cell, the dimension measured being a distance from the proximity measuring device (54) to a wall (53) of a chamber (45) within the load cell (26).

7. A vehicle according to any one of the preceding claims characterised in that the vehicle is of the loading type having a loading arm (11) to enable a load to be moved outwardly relative to a body (12) of the vehicle (10) and an oscillating axle (23) wherein the connection between the axle (23) and a body (12) of the vehicle (14) is by means of a single load pin which permits the axle to oscillate in response to the terrain over which the vehicle is travelling.

8. A vehicle according to any one of the preceding claims characterised in that a load sensing means (26) is provided associated with each wheel (15,16) of the vehicle (10), so that the total weight of the vehicle (10) and any load carried by the vehicle, can be determined.

**Revendications**

1. Véhicule (10) muni de roues comprenant un essieu (23) et une paire de roues (15, 16) portées sur des moyeux (30) situés aux extrémités opposées (37) de l'essieu (23), ainsi que des moyens (26) pour détecter une charge transmise à partir de l'essieu (23) vers au moins l'une des roues (15, 16), caractérisé en ce que les moyens (26) de détection de charge comprennent une cellule extensométrique qui assure une liaison structurelle entre l'essieu (23) et le moyeu (30) de la roue (15, 16) respective de sorte que la charge est transmise par l'intermédiaire de la cellule extensométrique (26) vers l'essieu (30).

2. Véhicule (10) selon la revendication 1, caractérisé en ce qu'il y a une paire de cellules extensométriques (26) assurant chacune une liaison structurelle entre l'une des extrémités (37) de l'essieu et un moyeu (30) respectif.

3. Véhicule selon la revendication 2, caractérisé en ce qu'une paire de cellules extensométriques (26) est prévue entre chacune des extrémités (37) de l'essieu et le moyeu (30) respectif.

4. Véhicule selon la revendication 3, caractérisé en ce que les moyeux (30) portant les roues (15, 16) sont mobiles chacun par rapport à l'essieu (23) autour d'un axe (34) respectif généralement vertical pour assurer la direction du véhicule.

5. Véhicule selon la revendication 4, caractérisé en ce que chacune des cellules extensométriques (26) présente une partie (43, 44) s'étendant axialement qui fournit une surface porteuse pour des paliers (42) entre la cellule extensométrique (26) respective et le moyeu (30).

6. Véhicule selon l'une quelconque de revendications précédentes, caractérisé en ce que la cellule ou chaque cellule extensométrique comprend un dispositif (54) de mesure de proximité capacitif ou inductif qui mesure des changements d'une dimension de la cellule extensométrique, la dimension mesurée étant une distance séparant le dispositif (54) de mesure de proximité et une paroi (53) d'une chambre (45) située à l'intérieur de la cellule extensométrique (26) charge.

7. Véhicule selon l'une quelconque des revendications précédentes, caractérisé en ce que le véhicule est du type chargeur comportant un bras (11) de chargement pour permettre de déplacer une charge vers l'extérieur par rapport à un corps (12) du véhicule (10) et un essieu (23) oscillant dans lequel la liaison entre l'essieu (23) et un corps (12) du véhicule (10) est assurée à l'aide d'un axe de charge unique qui permet à l'essieu d'osciller en fonction du terrain sur lequel le véhicule se déplace.

8. Véhicule selon l'une quelconque des revendications précédentes, caractérisé en ce que des moyens (26) de détection de charge sont prévus en association avec chaque roue (15, 16) du véhicule (10), de sorte que le poids total du véhicule (10) et de toute charge portée par ce dernier puisse être déterminé.

**Patentansprüche**

1. Fahrzeug (10) mit Rädern, welches eine Achse (23) und ein Paar von Rädern (15, 16), welche auf Naben (30) an einander gegenüberliegenden Enden (37) der Achse (23) getragen sind, sowie eine Einrichtung (26) zum Erfassen einer Last, die von der Achse (23) zu wenigstens einem der Räder (15, 16) übertragen wird, aufweist dadurch gekennzeichnet, daß die Lasterfassungseinrichtung (26) eine Lastzelle aufweist, die eine strukturelle Verbindung zwischen der Achse (23) und der Nabe (30) des jeweiligen Rades (15, 16) bildet, so daß die Last über die Lastzelle (26) zu der Nabe (30) übertragen wird.

2. Fahrzeug (10) nach Anspruch 1, dadurch gekennzeichnet, daß ein Paar von Lastzellen (26), wobei jede eine strukturelle Verbindung zwischen einem der Achsenenden (37) und einer entsprechenden Nabe (30) bildet, vorgesehen sind.

3. Fahrzeug nach Anspruch 2, dadurch gekennzeichnet, daß ein Paar von Lastzellen (26) zwischen jedem der Achsenenden (37) und der jeweiligen Nabe (30) vorgesehen sind.

4. Fahrzeug nach Anspruch 3, dadurch gekennzeichnet, daß die die Räder (15,16) tragenden Naben (30) jede relativ zu der Achse (23) um eine entsprechende im allgemeinen aufrechte Achse (34) bewegbar sind, um das Lenken des Fahrzeuges zu bewirken.

5. Fahrzeug nach Anspruch 4, dadurch gekennzeichnet, daß jede der Lastzellen (26) einen sich axial erstreckenden Teil (43, 44) aufweist, der eine Lagerfläche für Lager (42) zwischen der jeweiligen Lastzelle (26) und Nabe (30) bildet.

6. Fahrzeug nach einem der vorangehenden Ansprüche, dadurch gekennzeichnet, daß die oder jede Lastzelle eine kapazitive oder induktive Näherungsmeßvorrichtung (54) aufweist, die Änderungen in einer Dimension der Lastzelle mißt, wobei die gemessene Dimension ein Abstand von der Näherungsmeßvorrichtung (54) zu einer Wand (53) einer Kammer (45) innerhalb der Lastzelle (26) ist.

7. Fahrzeug nach einem der vorangehenden Ansprüche, dadurch gekennzeichnet, daß das Fahrzeug vom Lastentyp ist, welches einen Ladearm (11), um zu ermöglichen, daß eine Last nach außen relativ zu einem Körper (12) des Fahrzeuges (10) bewegt wird, und eine schwingende Achse (23) aufweist, wobei die Verbindung zwischen der Achse (23) und einem Körper (12) des Fahrzeuges (14) mit Hilfe eines einzelnen Laststiftes vorgenommen wird, welcher der Achse erlaubt, gemäß dem Gelände, über das das Fahrzeug fährt, zu schwingen.

8. Fahrzeug nach einem der vorangehenden Ansprüche, dadurch gekennzeichnet, daß eine Lasterfassungsvorrichtung (26) vorgesehen ist, die jedem Rad (15, 16) des Fahrzeuges (10) zugeordnet ist, so daß das Gesamtgewicht des Fahrzeuges (10) und irgendeiner von dem Fahrzeug getragenen Last bestimmt werden kann.

FIG 1

FIG 2

FIG 3

EP 0 312 390 B1

FIG 4